(19) Europäisches Patentamt
European Patent Office
Office européen des brevets

(11) EP 2 738 405 B1

(12) FASCICULE DE BREVET EUROPEEN

(45) Date de publication et mention
de la délivrance du brevet:
**23.03.2016 Bulletin 2016/12**

(51) Int Cl.:
***F16C 19/36*** *(2006.01)*

(21) Numéro de dépôt: **13194393.8**

(22) Date de dépôt: **26.11.2013**

(54) **Palier à roulement**

Wälzlager

Rolling bearing

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.11.2012 FR 1261374**

(43) Date de publication de la demande:
**04.06.2014 Bulletin 2014/23**

(73) Titulaire: **NTN-SNR Roulements
74000 Annecy (FR)**

(72) Inventeurs:
• **Faugeras, Gilles
73630 Le Chatelard (FR)**
• **Pourroy-Solari, Vincent
74230 Thones (FR)**

(74) Mandataire: **Sayettat, Julien Christian
STRATO-IP
18, rue Soleillet
75020 Paris (FR)**

(56) Documents cités:
EP-A1- 1 632 685        FR-A1- 2 600 131
FR-A1- 2 695 631        GB-A- 2 352 010

**Description**

L'invention concerne un palier à roulement comprenant une bague extérieure et une bague intérieure pourvues chacune d'une piste annulaire de roulement entre lesquelles sont disposés des corps roulants de sorte à permettre la rotation relative desdites bagues.

En particulier, l'invention s'applique aux paliers à roulement de type conique dans lesquels des rouleaux coniques sont utilisés en relation avec des pistes de roulement tronconiques équipant une bague extérieure appelée cuvette et une bague intérieure appelée cône. Plus précisément, chacune des pistes de roulement présente une portée axiale sur laquelle les rouleaux coniques sont en appui par l'intermédiaire de leur périphérie tronconique, ladite portée axiale s'étendant entre un bord extérieur et un bord intérieur en présentant une géométrie tronconique définie par une première génératrice.

Ce type de palier, de par son aptitude à supporter des efforts radiaux et axiaux importants, trouve particulièrement son application pour le guidage en rotation d'organe mécanique de transmission de couple, notamment dans des ponts moteurs de véhicule automobile, en étant utilisé par exemple en paire dans un montage en X.

De façon conventionnelle, le maintien des rouleaux coniques entre les pistes de roulement, notamment lorsque le palier est soumis à des charges axiales, est réalisé en équipant la bague intérieure d'un collet présentant une portée latérale de roulement sur laquelle les rouleaux coniques sont en appui par l'intermédiaire d'une face latérale. En particulier, cette portée radiale s'étend entre un bord extérieur et un bord intérieur en présentant une géométrie tronconique définie par une deuxième génératrice.

Du fait de leur contact avec les rouleaux coniques en mouvement, les portées axiale et radiale de roulement doivent être rectifiées, notamment au moyen d'une meule. Pour faciliter cette opération, il est connu de former une gorge de raccordement entre le bord extérieur de la portée axiale et le bord intérieur de la portée radiale afin de permettre à la meule d'atteindre les zones proches de l'intersection entre lesdites portées.

Toutefois, la gorge ainsi définie s'ouvre partiellement à l'extérieur du cône défini par la première génératrice, de sorte que le contact du rouleau conique sur la portée radiale est nécessairement éloigné de ce cône. Il en résulte un couple de frottement élevé entre les rouleaux coniques et le collet qui pénalise de manière significative la performance du palier en termes de couple et de puissance dissipée.

En outre, moins la gorge s'ouvre à l'extérieur du cône et plus elle doit s'ouvrir dans la portée axiale de roulement en diminuant sa longueur, alors que cette longueur influe directement sur la durée de vie du palier.

On connaît également, notamment du document FR-2 600 131, un palier à roulement conique dans lequel le maintien des rouleaux coniques entre les pistes de roulement est réalisé en équipant la bague extérieure d'un collet présentant une portée radiale de roulement.

L'invention vise à perfectionner l'art antérieur en proposant notamment un palier à roulement conique dont la bague extérieure est équipée d'un collet présentant une portée radiale de roulement, dans lequel le couple de frottement et la durée de vie sont optimisés conjointement, notamment en relation avec une application dans des ponts moteurs de véhicule automobile.

A cet effet, l'invention propose un palier à roulement comprenant une bague extérieure et une bague intérieure pourvues chacune d'une piste annulaire de roulement entre lesquelles sont disposés des rouleaux coniques de sorte à permettre la rotation relative desdites bagues autour d'un axe, chacune desdites pistes de roulement présentant une portée axiale sur laquelle les rouleaux coniques sont en appui par l'intermédiaire de leur périphérie tronconique, ladite portée axiale s'étendant entre un bord extérieur et un bord intérieur en présentant une géométrie tronconique définie par une première génératrice, la bague extérieure étant équipée d'un collet présentant une portée radiale de roulement sur laquelle les rouleaux coniques sont en appui par l'intermédiaire d'une face latérale, ladite portée radiale s'étendant entre un bord extérieur et un bord intérieur en présentant une géométrie tronconique définie par une deuxième génératrice, les bords extérieurs des portées axiale et radiale étant raccordés par l'intermédiaire d'une gorge dont la géométrie est telle que :

$$L_{BE} \geq K\, L_{BI} \text{ et } IA \leq \left( \left( \sin\left(\frac{\gamma}{4}\right) - 0{,}005 \right) \right) \times R_t ,$$

avec :

- $L_{BE}$ et $L_{BI}$ la longueur de la portée axiale de la piste de roulement respectivement extérieure et intérieure ;

$$- \quad K \text{ égal à } \frac{1 - \dfrac{R_{RK}}{R_{BE}}}{1 + \dfrac{R_{RK}}{R_{BI}}}$$

avec $R_{RK}$ le grand rayon du rouleau et $R_{BE}$, $R_{BI}$ le rayon mesuré à l'intersection fictive entre la portée radiale et la portée axiale de la piste de roulement respectivement extérieure et intérieure ;

- $R_t$ le rayon de tête de la face latérale des rouleaux coniques ;
- IA la distance entre le bord extérieur A de la portée radiale et l'intersection fictive I entre la portée radiale et la portée axiale de la piste de roulement extérieure ;
- y le demi-angle de conicité des rouleaux.

D'autres objets et avantages de l'invention apparaîtront dans la description qui suit, faite en référence aux figures jointes, dans lesquelles :

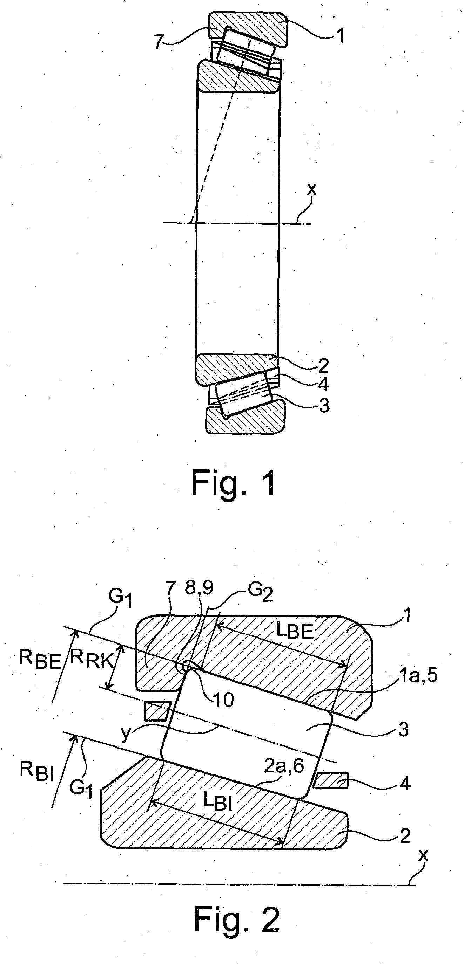

- la figure 1 est une représentation en coupe longitudinale d'un palier à roulement selon un mode de réalisation de l'invention ;
- la figure 2 est une vue schématique agrandie du palier de la figure 1 ;
- la figure 3 montre deux géométries de gorge pour un palier à roulement.

En relation avec les figures, on décrit ci-dessous un palier à roulement comprenant une bague extérieure 1 et une bague intérieure 2 pourvues chacune d'une piste annulaire 1a, 2a de roulement entre lesquelles sont disposées des rouleaux coniques 3 de sorte à permettre la rotation relative desdites bagues autour d'un axe X.

Dans la description, les termes « extérieur » et « intérieur » sont définis par rapport à l'axe X de rotation du palier, respectivement pour une localisation éloignée et proche dudit axe. Les termes « axial » et « radial » sont également définis par rapport à l'axe A, respectivement pour une direction suivant cet axe et s'éloignant ou se rapprochant de lui.

Pour permettre la rétention des rouleaux 3 dans l'espace de roulement conique lors de la rotation du palier, ledit palier comprend une cage de rétention 4, notamment pourvue de logements dans lesquels respectivement un rouleau 3 est retenu en pouvant tourner autour de son axe propre Y.

De façon avantageuse, les paliers selon l'invention, de par leur aptitude à supporter des efforts radiaux et axiaux importants, trouvent particulièrement leur application pour le guidage en rotation d'organe mécanique de transmission de couple, notamment dans des ponts moteurs de véhicule automobile, en étant utilisés par exemple en paire dans un montage en X.

Chacune des pistes de roulement 1a, 2a présente une portée axiale 5, 6 sur laquelle les rouleaux coniques 3 sont en appui par l'intermédiaire de leur périphérie tronconique, ladite portée axiale s'étendant entre un bord extérieur B et un bord intérieur en présentant une géométrie tronconique définie par une première génératrice $G_1$.

En particulier, la première génératrice $G_1$ définit un cône extérieur dans lequel la portée axiale 5 de la piste de roulement extérieure 1a est formée, les bords B de ladite piste étant annulaires et le rayon du bord extérieur B étant supérieur au rayon du bord intérieur. De même, la première génératrice $G_1$ définit un cône intérieur sur lequel la portée axiale 6 de la piste de roulement intérieure 2a est formée, les bords de ladite piste étant annulaires et le rayon du bord extérieur étant supérieur au rayon du bord intérieur.

La bague extérieure 1 est équipée d'un collet 7 sous la forme d'un épaulement annulaire de matière qui est réalisé sur la face extérieure de la bague extérieure 2. Le collet 7 permet notamment le maintien des rouleaux coniques 3 entre les pistes de roulement 1a, 2a, notamment lorsque le palier est soumis à des charges axiales. Dans le mode de réalisation représenté, la bague intérieure 2 est dépourvue de collet, la portée axiale 6 de la piste de roulement intérieure 2a débouchant de part et d'autre de la bague intérieure 2.

Le collet 7 présente une portée radiale 8 de roulement sur laquelle les rouleaux coniques 3 sont en appui par l'intermédiaire d'une face latérale 9, ladite portée radiale s'étendant entre un bord extérieur A et un bord intérieur en présentant une géométrie tronconique définie par une deuxième génératrice $G_2$. En particulier, les bords sont annulaires et le rayon du bord extérieur A est supérieur au rayon du bord intérieur.

De façon avantageuse, les portées axiales 5, 6 et radiale 8 de roulement sont rectifiées, notamment au moyen d'une meule et, pour faciliter cette opération, une gorge 10 de raccordement est formée entre les bords extérieurs B, A des portées axiale 5 et radiale 8 afin de permettre à la meule d'atteindre les zones proches de l'intersection entre lesdites portées.

Pour optimiser conjointement le couple de frottement et la durée de vie, notamment en relation avec une application dans des ponts moteurs de véhicule automobile, la géométrie de la gorge 10 est telle que :

$$L_{BE} \geq K \ L_{BI} \text{ et } IA \leq \left(\left(\sin(\tfrac{\gamma}{4}) - 0,005\right)\right) \times R_t ;$$

avec:

- $L_{BE}$ et $L_{BI}$ la longueur de la portée axiale 5, 6 de la piste de roulement respectivement extérieure 1 a et intérieure 2a ;

- K égal à $\dfrac{1 - \dfrac{R_{RK}}{R_{BE}}}{1 + \dfrac{R_{RK}}{R_{BI}}}$ avec $R_{RK}$ le grand rayon du rouleau 3 et $R_{BE}$, $R_{BI}$ le rayon mesuré à l'intersection fictive entre la portée radiale 8 et la portée axiale 5, 6 de la piste de roulement respectivement extérieure 1 a et intérieure 2a, lesdits rayons étant mesurés depuis l'axe X de rotation du palier ;

- $R_t$ le rayon de tête de la face latérale 9 des rouleaux coniques 3 ;
- IA la distance entre le bord extérieur A de la portée radiale 8 et l'intersection fictive I entre la portée radiale 8 et la portée axiale 5 de la piste de roulement extérieure 1 a ;
- $\gamma$ le demi-angle de conicité des rouleaux 3.

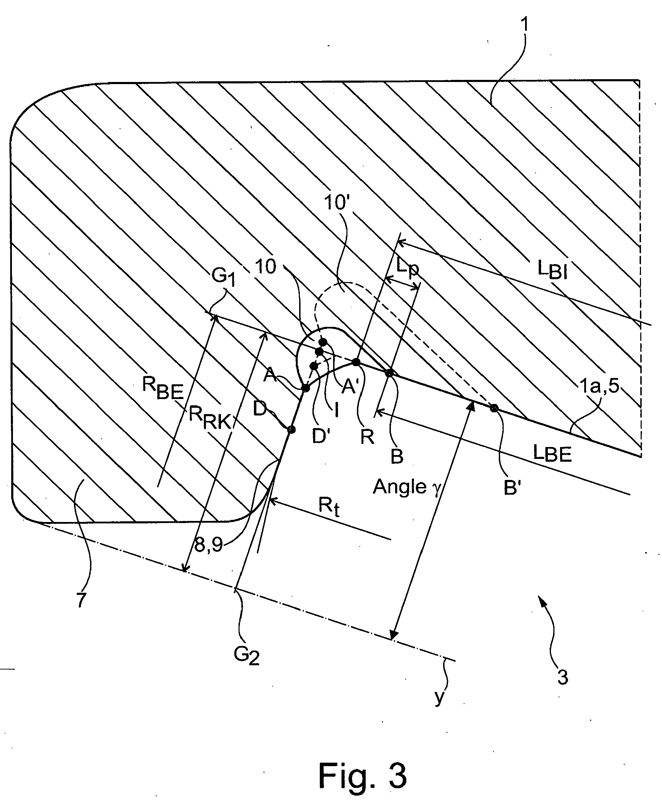

La figure 3 représente les points I et A ainsi que le point R correspondant au début du rayon du rouleau 3, le point B correspondant au bord extérieur de la portée axiale 5, le point D correspondant au point de contact entre la face latérale 9 du rouleau 3 et la portée radiale 8, ainsi que la distance $L_p$ correspondant à la différence entre $L_{BI}$ et $L_{BE}$ qui est égale à la distance RB.

Sur la figure 3, les points sans prime illustrent une géométrie de la gorge 10 dans laquelle $IA = \left(\left(\sin(\tfrac{\gamma}{4}) - 0,005\right)\right) \times R_t$ et la distance RB est telle que: $L_{BE} = K \ L_{BI}$. Les points notés avec un prime correspondent à des valeurs pour une géométrie de la gorge 10 ' telle que: $IA' < \left(\left(\sin(\tfrac{\gamma}{4}) - 0,005\right)\right) \times R_t$ et la distance RB' est telle que : $L_{BE} > K \ L_{BI}$.

Ainsi, la distance IA' est réduite par rapport la distance IA de sorte à réduire le couple de frottement et la distance RB' est allongée par rapport à la distance RB pour conserver une gorge 10 de volume suffisant pour la rectification de la piste extérieure 1a sans impacter négativement sur la durée de vie du palier. Le couple de frottement peut être réduit en prévoyant une géométrie de la gorge 10 telle que : $-0,01 \ R_t \leq IA$. Comme illustré sur la figure 3, le point A' peut être positionné de sorte que la distance IA' dans le sens extérieur intérieur soit négative, c'est-à-dire que le bord extérieur A de la portée radiale 8 est disposé à l'extérieur du cône extérieur dans lequel la portée axiale 5 de la piste de roulement extérieure 1 a est formée.

De façon avantageuse, la géométrie de la gorge 10 peut être telle que : $IA \leq 0,5 \ \left(\left(\sin(\tfrac{\gamma}{4}) - 0,005\right)\right) \times R_t$ ou plus précisément telle que: $IA \leq 0,3 \ \left(\left(\sin(\tfrac{\gamma}{4}) - 0,005\right)\right) \times R_t$. En particulier, en rapprochant ainsi le point de contact D du point I, on diminue le couple de frottement entre la face latérale 9 du rouleau 3 et la portée radiale 8.

Concernant la durée de vie, on peut prévoir que la géométrie de la gorge 10 soit telle que : $L_{BE} \leq 1,2 \ K \ L_{BI}$ ou plus précisément telle que : $L_{BE} \leq 1,1 \ K \ L_{BI}$. En particulier, ces valeurs réduites de $L_{BE}$ n'affectent pas la durée de vie puisque, dans les paliers à roulement conique, la majorité des efforts est encaissée par la bague intérieure 2.

En outre, la présence du collet 7 sur la bague extérieure 1 induit, par rapport à un collet solidaire de la bague intérieure 2, une vitesse de glissement du collet 7 qui est réduite, une meilleure lubrification grâce à la centrifugation de l'huile sur le collet 7 et un risque de grippage repoussé.

**Revendications**

1. Palier à roulement comprenant une bague extérieure (1) et une bague intérieure (2) pourvues chacune d'une piste annulaire (1a, 2a) de roulement entre lesquelles sont disposés des rouleaux coniques (3) de sorte à permettre la rotation relative desdites bagues autour d'un axe (X), chacune desdites pistes de roulement présentant une portée axiale (5, 6) sur laquelle les rouleaux coniques (3) sont en appui par l'intermédiaire de leur périphérie tronconique, ladite portée axiale s'étendant entre un bord extérieur (B) et un bord intérieur en présentant une géométrie tronconique définie par une première génératrice ($G_1$), la bague extérieure (1) étant équipée d'un collet (7) présentant une portée radiale (8) de roulement sur laquelle les rouleaux coniques (3) sont en appui par l'intermédiaire d'une face latérale (9), ladite portée radiale s'étendant entre un bord extérieur (A) et un bord intérieur en présentant une géométrie tronconique définie par une deuxième génératrice ($G_2$), ledit palier étant **caractérisé en ce que** les bords extérieurs (B, A) des portées axiale, (5) et radiale (8) sont raccordés par l'intermédiaire d'une gorge (10) dont la géométrie est telle que :

$$L_{BE} \geq K\, L_{BI} \text{ et } IA \leq \left( \left( \sin(\tfrac{\gamma}{4}) - 0,005 \right) \right) \times R_t,$$

avec :

- $L_{BE}$ et $L_{BI}$ la longueur de la portée axiale (5, 6) de la piste de roulement respectivement extérieure (1 a) et intérieure (2a) ;

- K égal à $\dfrac{1 - \dfrac{R_{RK}}{R_{BE}}}{1 + \dfrac{R_{RK}}{R_{BI}}}$ avec $R_{RK}$ le grand rayon du rouleau (3) et $R_{BE}$, $R_{BI}$ le rayon mesuré à l'intersection fictive entre la portée radiale (8) et la portée axiale (5) de la piste de roulement respectivement extérieure (1a) et intérieure (2a) ;

- $R_t$ le rayon de tête de la face latérale (9) des rouleaux coniques (3) ;
- IA la distance entre le bord extérieur (A) de la portée radiale (8) et l'intersection fictive (I) entre la portée radiale (8) et la portée axiale (5) de la piste de roulement extérieure (1a) ;
- y le demi-angle de conicité des rouleaux (3).

2. Palier à roulement selon la revendication 1, **caractérisé en ce que** la géométrie de la gorge (10) est telle que : -0,01 $R_t \leq IA$

3. Palier à roulement selon la revendication 1 ou 2, **caractérisé en ce que** la géométrie de la gorge (10) est telle que :

$$IA < \left( \left( \sin(\tfrac{\gamma}{4}) - 0,005 \right) \right) \times R_t.$$

4. Palier à roulement selon la revendication 3, **caractérisé en ce que** la géométrie de la gorge (10) est telle que :

$$IA \leq 0,5 \left( \left( \sin(\tfrac{\gamma}{4}) - 0,005 \right) \right) \times R_t.$$

5. Palier à roulement selon la revendication 4, **caractérisé en ce que** la géométrie de la gorge (10) est telle que :

$$IA \leq 0,3 \left( \left( \sin(\tfrac{\gamma}{4}) - 0,005 \right) \right) \times R_t.$$

6. Palier à roulement selon l'une quelconque des revendications 1 à 5, **caractérisé en ce que** la géométrie de la gorge (10) est telle que : $L_{BE} > K\, L_{BI}$.

**7.** Palier à roulement selon l'une quelconque des revendications 1 à 6, **caractérisé en ce que** la géométrie de la gorge (10) est telle que : $L_{BE} \leq 1{,}2\ K\ L_{BI}$.

**8.** Palier à roulement selon la revendication 7, **caractérisé en ce que** la géométrie de la gorge (10) est telle que : $L_{BE} \leq 1{,}1\ K\ L_{BI}$.

**9.** Palier à roulement selon l'une quelconque des revendications 1 à 8, **caractérisé en ce que** la portée axiale (6) de la piste de roulement intérieure (2a) débouche de part et d'autre de la bague intérieure (2).

**Patentansprüche**

**1.** Wälzlager, das einen äußeren Ring (1) und einen inneren Ring (2) umfasst, die jeweils mit einer ringförmigen Laufbahn (1a, 2a) versehen sind, zwischen welchen konische Walzen (3) derart angeordnet sind, dass sie die relative Drehung der Ringe um eine Achse (X) erlauben, wobei jede der Laufbahnen eine axiale Auflage (5, 6) aufweist, auf der die konischen Walzen (3) über ihren kegelstumpfförmigen Umfang aufliegen, wobei sich die axiale Auflage zwischen einem Außenrand (B) und einem Innenrand erstreckt, indem sie eine kegelstumpfförmige Geometrie aufweist, die durch eine erste Mantellinie ($G_1$) definiert ist, wobei der äußere Ring (1) mit einem Bund (7) ausgestattet ist, der eine radiale Lagerauflage (8) aufweist, auf der die konischen Walzen (3) über eine seitliche Fläche (9) aufliegen, wobei sich die radiale Auflage zwischen einem Außenrand (A) und einem Innenrand erstreckt, indem sie eine kegelstumpfförmige Geometrie aufweist, die durch eine zweite Mantellinie ($G_2$) definiert ist, Lager **dadurch gekennzeichnet, dass** die Außenränder (B, A) der axialen (5) und der radialen Auflage (8) über eine Nut (10), verbunden sind, deren Geometrie derart ist, dass:

$$\mathrm{L_{BE}} \ \geq \ \mathrm{K}\ \mathrm{L_{BI}}\ \text{und}\ \ IA \leq \left(\left(\sin\left(\frac{\gamma}{4}\right) - 0{,}005\right)\right) \times R_t$$

wobei:

- $L_{BE}$ und $L_{BI}$ die Länge der axialen Auflage (5, 6) jeweils der äußeren (1a) und der inneren (2a) Laufbahn ist,

- K gleich $\dfrac{1 - \dfrac{R_{RK}}{R_{BE}}}{1 + \dfrac{R_{RK}}{R_{BI}}}$ ist, wobei $R_{RK}$ der große Radius der Walze (3) ist und $R_{BE}$, $R_{BI}$ der Radius ist, der an der imaginären Schnittstelle zwischen der radialen Auflage (8) und der axialen Auflage (5) jeweils der äußeren (1a) und der inneren (2a) Rollbahn gemessen ist,

- $R_t$ der kopfseitige Radius der seitlichen Fläche (9) der konischen Walzen (3) ist,
- IA die Entfernung zwischen dem Außenrand (A) und der radialen Auflage (8) und der imaginären Schnittstelle (I) zwischen der radialen Auflage (8) und der axialen Auflage (5) der äußeren Rollbahn (1a) ist,
- y der Konizitätshalbwinkel der Walzen (3) ist.

**2.** Wälzlager nach Anspruch 1, **dadurch gekennzeichnet, dass** die Geometrie der Nut (10) derart ist, dass: $-0{,}01\ R_t \leq IA$ ist.

**3.** Wälzlager nach Anspruch 1 oder 2, **dadurch gekennzeichnet, dass** die Geometrie der Nut (10) derart ist, dass:

$$IA \leq \left(\left(\sin\left(\frac{\gamma}{4}\right) - 0{,}005\right)\right) \times R_t\ \text{ist.}$$

**4.** Wälzlager nach Anspruch 3, **dadurch gekennzeichnet, dass** die Geometrie der Nut (10) derart ist, dass:

$$IA \leq 0{,}5\left(\left(\sin\left(\frac{\gamma}{4}\right) - 0{,}005\right)\right) \times R_1\ \text{ist.}$$

**5.** Wälzlager nach Anspruch 4, **dadurch gekennzeichnet, dass** die Geometrie der Nut (10) derart ist, dass:

$$IA \leq 0{,}3\left(\left(\sin(\frac{\gamma}{4}) - 0{,}005\right)\right) \times R_t \text{ ist.}$$

**6.** Wälzlager nach einem der Ansprüche 1 bis 5, **dadurch gekennzeichnet, dass** die Geometrie der Nut (10) derart ist, dass $L_{BE} > K\, L_{BI}$ ist.

**7.** Wälzlager nach einem der Ansprüche 1 bis 6, **dadurch gekennzeichnet, dass** die Geometrie der Nut (10) derart ist, dass: $L_{BE} \leq 1{,}2\, K\, L_{BI}$.

**8.** Wälzlager nach Anspruch 7, **dadurch gekennzeichnet, dass** die Geometrie der Nut (10) derart ist, dass: $L_{BE} \leq 1{,}1\, K\, L_{BI}$.

**9.** Wälzlager nach einem der Ansprüche 1 bis 8, **dadurch gekennzeichnet, dass** die axiale Auflage (6) der inneren Laufbahn (2a) zu beiden Seiten des inneren Rings (2) mündet.

**Claims**

**1.** Rolling bearing comprising an outer ring (1) and an inner ring (2) each provided with an annular raceway (1a, 2a) between which conical rollers (3) are arranged so as to enable the relative rotation of said rings about an axis (X), each of said raceways having an axial bearing area (5, 6) whereon the conical rollers (3) bear by means of the truncated periphery thereof, said axial bearing area extending between an outer edge (B) and an inner edge presenting a truncated geometry defined by a first generatrix (G₁), the outer ring (1) being equipped with a flange (7) having a radial bearing area (8) whereon the conical rollers (3) bear by means of a lateral face (9), said radial bearing area extending between an outer edge (A) and an inner edge presenting a truncated geometry defined by a second generatrix (G₂), said bearing being **characterised in that** the outer edges (B, A) of the axial (5) and radial (8) bearing areas are connected by means of a groove (10) wherein the geometry is such that:

$$L_{BE} \geq K\ L_{BI} \ \text{and}\ IA \leq \left(\left(\sin(\tfrac{\gamma}{4}) - 0.005\right)\right) \times R_t,$$

where:

- $L_{BE}$ and $L_{BI}$ are the length of the axial bearing area (5, 6) of the outer (1a) and inner (2a) raceway, respectively;

- K is equal to $\dfrac{1 - \frac{R_{RK}}{R_{BE}}}{1 - \frac{R_{RK}}{R_{BI}}}$ where $R_{RK}$ is the large radius of the roller (3) and $R_{BE}\ R_{BI}$ the radius measured at the hypothetical intersection between the radial bearing area (8) and the axial bearing area (5) of the outer (1a) and inner (2a) raceway, respectively;
- $R_t$ is the top radius of the lateral face (9) of the conical rollers (3);
- IA is the distance between the outer edge (A) of the radial bearing area (8) and the hypothetical intersection between the radial bearing area (8) and the axial bearing area (5) of the outer raceway (1a);
- $\gamma$ is the half cone angle of the rollers (3).

**2.** Rolling bearing according to claim 1, **characterised in that** the geometry of the groove (10) is such that: $-0.01\, R_t \leq IA$.

**3.** Rolling bearing according to claim 1 or 2, **characterised in that** the geometry of the groove (10) is such that:

$$IA < \left(\left(\sin(\tfrac{\gamma}{4}) - 0.005\right)\right) \times R_t.$$

**4.** Rolling bearing according to claim 3, **characterised in that** the geometry of the groove (10) is such that: $IA \leq$

$$0.5\left(\left(\sin(\tfrac{\gamma}{4}) - 0.005\right)\right) \times R_t.$$

5. Rolling bearing according to claim 4, **characterised in that** the geometry of the groove (10) is such that: IA ≤

$$0.3\left(\left(\sin\left(\frac{Y}{4}\right)-0.005\right)\right)\times R_t.$$

6. Rolling bearing according to any of claims 1 to 5, **characterised in that** the geometry of the groove (10) is such that: $L_{BE} > K\,L_{BI}$.

7. Rolling bearing according to any of claims 1 to 6, **characterised in that** the geometry of the groove (10) is such that: $L_{BE} \leq 1.2\,K\,L_{BI}$.

8. Rolling bearing according to claim 7, **characterised in that** the geometry of the groove (10) is such that: $L_{BE} \leq 1.1\,K\,L_{BI}$.

9. Rolling bearing according to any of claims 1 to 8, **characterised in that** the axial bearing area (6) of the inner raceway (2a) emerge on either side of the inner ring (2).

Fig. 1

Fig. 2

9

Fig. 3

**RÉFÉRENCES CITÉES DANS LA DESCRIPTION**

**Documents brevets cités dans la description**

- FR 2600131